# EUROPEAN PATENT SPECIFICATION

(11) **EP 3 032 886 B1**
(45) Date of publication and mention of the grant of the patent: **14.06.2017**
(21) Application number: 14780210.2
(22) Date of filing: 15.04.2014
(51) Int. Cl.: H04W 48/16, H04W 64/00, H04W 36/24, H04W 84/04, H04W 24/10, H04W 8/00

(54) **PI REPORTING METHOD, UE, NETWORK DEVICE AND COMPUTER STORAGE MEDIUM**
PI-BERICHTSVERFAHREN, BENUTZEREINHEIT, NETZWERKVORRICHTUNG UND COMPUTERSPEICHERMEDIUM
PROCÉDÉ DE RAPPORT D'INDICATION DE PROXIMITÉ (PI), ÉQUIPEMENT UTILISATEUR (UE), DISPOSITIF RÉSEAU ET SUPPORT DE STOCKAGE INFORMATIQUE

(30) Priority: 07.08.2013 CN 201310342139
(43) Date of publication of application: 15.06.2016
(73) Proprietor: ZTE Corporation, Shenzhen, Guangdong 518057 (CN)
(72) Inventor: GAO, Yin, Shenzhen Guangdong 518057 (CN); HUANG, Ying, Shenzhen Guangdong 518057 (CN); XIE, Feng, Shenzhen Guangdong 518057 (CN)
(74) Representative: Lavoix
(86) International application number: PCT/CN2014/075399
(87) International publication number: WO 2014/161513

(56) References cited:
- CN-A- 102 104 921
- CN-A- 102 202 309
- CN-A- 102 598 776
- CN-A- 103 037 463
- NOKIA SIEMENS NETWORKS ET AL: "Reporting of HNB System Information", 3GPP DRAFT; R2-100546 HNB AUTONOMOUS REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050421149, [retrieved on 2010-01-12]
- PANASONIC: "Dedicated signalling for proximity indication", 3GPP DRAFT; R2-096492, no. Jeju; 20091109, 9 November 2009 (2009-11-09), XP050391080, [retrieved on 2009-11-02]
- ZTE: "Correction of Mobility to HeNB's CSG and hybrid c", 3GPP DRAFT; R3-131006, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Fukuoka, Japan; 20130520 - 20130524 10 May 2013 (2013-05-10), XP050700955, Retrieved from the Internet: URL:http://www.3gpp.org/ftp/tsg_ran/WG3_Iu /TSGR3_80/Docs/ [retrieved on 2013-05-10]
- PANASONIC: "Configuration for proximity indication in measurement report", 3GPP DRAFT; R2-095606_CONFIG_FOR_PROXIMITY_INDICATION_ IN_MR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390123, [retrieved on 2009-10-06]

## Description

### TECHNICAL FIELD

The present disclosure relates to application of a small cell, and in particular to a method and a system for reporting a Proximity Indication (PI), User Equipment (UE), network equipment and a computer storage medium.

### BACKGROUND

With development of wireless multimedia services, people have more or more requirements on high data speeds and good user experiences, so that higher requirements on system capacity and coverage of a conventional cellular network are set forth. In a conventional Long Term Evolution (LTE) cellular network, a Macrocell as a unique access side network element provides access service for UE. In order to meet a requirement of a user on a higher data speed and improve spectral efficiency of the cellular network, the 3rd Generation Partnership Project (3GPP) introduces a small cell as a supplement of the Macrocell to provide access service for UE. A small cell is derived from a Femtocell initially designed for a home scenario. "Small" of the small cell is relative to a conventional Macrocell, and the small cell is characterized in miniaturization, low transmitted power, high controllability, intelligence and flexibility in networking. In terms of transmitted power, typical transmitted power is 100mW to 5W. In terms of weight, the weight is usually 2 to 10kg. In terms of networking manner, back transmission of multiple technologies including a Digital Subscriber Loop (DSL)/optical fibre/Wireless Local Area Network (WLAN) and a cellular technology is supported. Moreover, the small cell also has Self-Organized Network (SON) functions of automatic neighbouring cell discovery, self-configuration and the like.

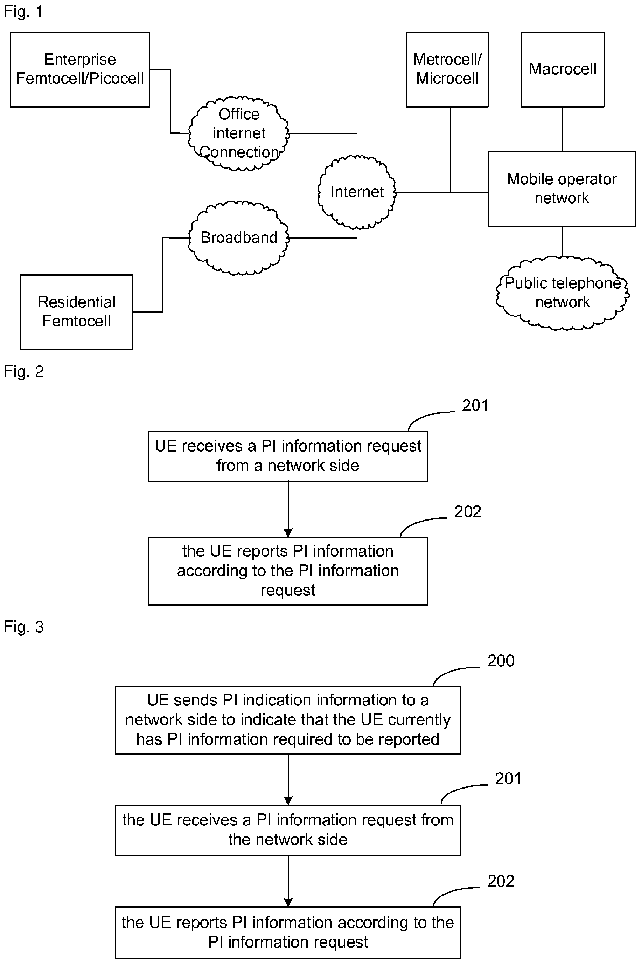

A small cell has four product forms. The first is called a Femtocell, mainly configured for home and enterprise environments. The second is called a Picocell, applied to an indoor public place such as an airport, a railway station and a shopping centre. The third is called a Microcell, configured for an urban area or village where a Macrocell is not allowed to be deployed due to limits of an occupied area. The last is called a Metrocell, mainly configured for a hotspot of an urban area or a village for capacity bottleneck reduction. Fig. 1 is a diagram of a small cell network environment. As shown in Fig. 1, the small cell network environment is very complex, and the number of small cell equipment is obviously increased by orders of magnitude compared with that of a conventional Macrocell network.

Since Sprint deployed the first Femtocell in the world in September, 2007, small cells have been successfully deployed in 41 networks in 23 countries, and there have been deployed more than 3.8 millions of small cells throughout the world, mainly (80%) in form of Femtocell. In terms of regional distribution, the small cells are mainly distributed in United States (Sprint deploys more than 0.9 million/AT&T deploys about 0.5 million), Europe, Japan and Korea (Softbank of Japan deploys 0.12 million).

In a hotspot deployment scenario, for achieving a higher data speed and spectral efficiency, it is necessary to densely deploy a large number of small cells in an area, Macrocells and the small cells may adopt different frequency points, and the small cells may also adopt different frequency points. Particularly in an indoor deployment scenario, such as an office and a shopping mall which are usually multi-storey buildings, small cells may be deployed in different storeys, and working frequency and power of the small cells in different storeys may be different.

In an existing Closed Subscriber Group (CSG) Femtocell environment, for implementing timely handover of UE from a Macrocell to a CSG Femtocell, a method for reporting a PI is adopted. In an existing method, UE leaves or enters coverage of one or more CSG member cells to trigger PI reporting. How the UE triggers PI reporting is internally implemented, and is not specified in detail in an existing standard. For example, the UE may make a judgment about entering or leaving coverage of one or more CSG cells and trigger PI reporting by virtue of own position information and related information which has been stored before, such as frequency points, Evolved Universal Terrestrial Radio Access Network Cell Global Identities (ECGIs), Physical Cell ID (PCIs), position information and CSG IDs, of the CSG cells that the UE entered before. In addition, a network side contains simple PI reporting control indication information configured to indicate the UE to start or stop PI reporting of an LTE system or a UTRAN system in a Radio Resource Control (RRC) connection reconfiguration message. After the UE reports the PI, the network side transmits a measurement control command according to the frequency point and RAT information in the PI, and the UE may report a measurement result for triggering handover judgment.

At present, the concept of CSG is not adopted for a small cell, and then UE may trigger judgment by virtue of historical information, which is stored in own footprint, of a small cell that the UE entered before. However, based on such a triggering manner, PI reporting of UE according to own judgment information may cause reporting of a large amount of PI information because there are numerous small cells (compared with CSG member cells). Although the network side may adopt a simple control manner at present, it is necessary to consider a more reasonable PI reporting control and acquisition method in a complex small cell network environment. For example, in a Small Cell Enhancement (SCE) scenario where small cells are densely deployed, it is necessary to consider enabling a terminal to accurately report required small cell information for different types and geographical positions to avoid impact on signalling resources on an air interface, simultaneously improving accuracy of PI information reporting and implementing effective utilization of the reported information.

R2-100546 discloses three proposals which can significantly reduce the network load, reduce the delay before handover and an inter-frequency case which can significantly increase the chance of successful handover.

R2-096492 discusses which type of message is feasible for the proximity indication and has following two conclusions. Conclusion 1: in spite of there is relation between measurement configuration and proximity infication as the information, the proximity indication procedure itself has no interaction with any other procedure including measurement procedure; Conclusion 2: from signalling overhead perspective, new message is better, even though the benefit is not significant.

R3-131006 discloses a detail correcting process of mobility to HeNB's CSG and hybrid cells.

R2-095606 discusses and proposes a possible way forward for how UE is configured to send proximity indication to the network.

### SUMMARY

In view of this, the embodiments of the present disclosure are mainly intended to provide a method and a system for reporting a PI, UE and network equipment, which may increase accuracy and effectiveness of PI information reporting in a small cell network environment and may save signalling resources on the air interface.

The features of the method and device according to the present invention are defined in the independent claims, and the preferable features according to the present invention are defined in the dependent claims.

According to the method and system for reporting the PI, the UE, the network equipment and the computer storage medium of the embodiments of the present disclosure, the UE receives the PI information request from the network side; and reports the corresponding PI information according to the PI information request. Based on the abovementioned solutions, the embodiments of the present disclosure may implement pertinent reporting of the PI information for multiple cell types under control of the network side in a complex small cell network environment, reduce unnecessary information reporting and resource waste on an air interface and enable the network side to effectively implement small cell discovery, handover judgment optimization processing and the like by virtue of the PI information reported by the UE, thereby achieving higher accuracy and effectiveness of PI information reporting and facilitating improvement in network performance.

### BRIEF DESCRIPTION OF THE DRAWINGS

Fig. 1 is diagram illustrating a small cell network environment;
Fig. 2 is a flowchart showing a method for reporting a PI according to an embodiment of the present disclosure;
Fig. 3 is a flowchart showing another method for reporting a PI according to an embodiment of the present disclosure;
Fig. 4 is a diagram illustrating a structure of UE according to an embodiment of the present disclosure;
Fig. 5 is a diagram illustrating another structure of UE according to an embodiment of the present disclosure;
Fig. 6 is a structure diagram illustrating network equipment according to an embodiment of the present disclosure;
Fig. 7 is a flowchart showing PI reporting according to embodiment 1 of the present disclosure;
Fig. 8 is a flowchart showing PI reporting according to embodiment 2 of the present disclosure;
Fig. 9 is a flowchart showing PI reporting according to embodiment 3 of the present disclosure; and
Fig. 10 is a flowchart showing PI reporting according to embodiment 4 of the present disclosure.

### DETAILED DESCRIPTION

In each embodiment of the present disclosure, UE receives a PI information request from a network side; and the UE reports PI information according to the PI information request.

The embodiment of the present disclosure provides a method for reporting a PI. As shown in Fig. 2, the method includes:
Step 201: UE receives a PI information request from a network side; and
Step 202: the UE reports PI information according to the PI information request.

Optionally, the PI information request contains at least one or more of: a PI information reporting indicator, RAT/frequency point information specified to be reported, a cell type and specified geographical position information (such as latitude and longitude information).

Optionally, the step that the UE receives the PI information request from the network side is implemented as follows: the UE receives the PI information request contained in a private or public message from the network side. In the embodiment, the network side sends the PI information request to the UE through the private or public message to indicate that the UE needs to perform PI reporting of a small cell, and then the UE may trigger autonomous PI reporting.

Optionally, as shown in Fig. 3, before the step that the UE receives the PI information request from the network side, the method further includes:
Step 200: the UE sends PI indication information to the network side to indicate that the UE currently has PI information required to be reported, wherein the PI indication information may be a TRUE/FALSE indicator; and
accordingly, the step that the UE receives the PI information request from the network side is implemented as follows: the UE receives the PI information request sent according to the PI indication information by the network side, the PI information request containing at least one or more of: the specified RAT/frequency point information, the cell type and the specified geographical position information. In the embodiment, the network side sends the PI information request to the UE according to the PI indication information to instruct the UE to report specified PI information.

Optionally, the PI indication information is contained in a measurement result reporting message or an independent message, and
the PI information request is contained in a measurement control command message or an independent message.

In the embodiment of the present disclosure, the network side refers to an access network element device in a current small cell network environment, and the network side optionally includes at least any one of: a Macrocell, a Femtocell, a Picocell, a Microcell and a Metrocell.

Optionally, the PI information reported by the UE includes one or more of: RAT/frequency point information of a small cell, the cell type, an ECGI of the small cell, Tracking Area Identity (TAI) information of the reported cell and broadcast Public Land Mobile Network (PLMN) list information of the reported cell.

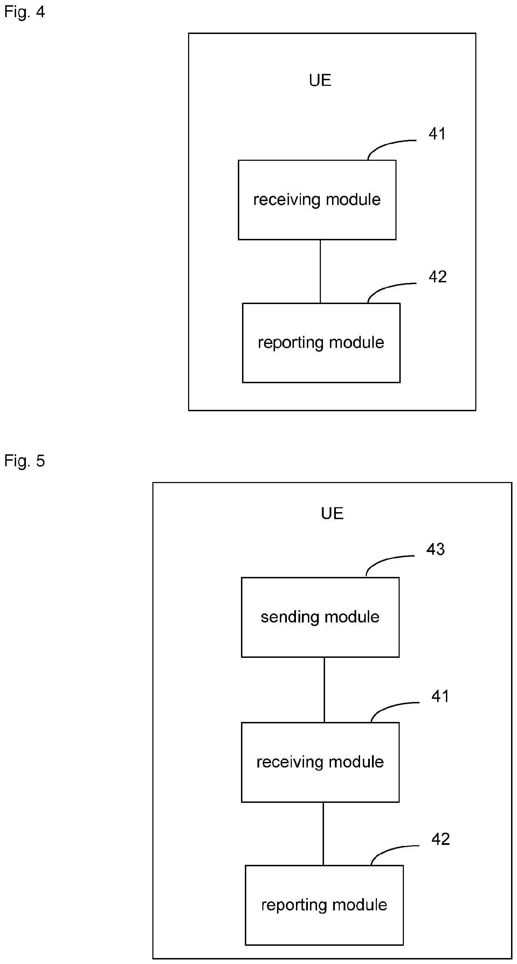

The embodiment of the present disclosure further provides UE. As shown in Fig. 4, the UE includes a receiving module 41 and a reporting module 42.

The receiving module 41 is configured to receive a PI information request from a network side.

The reporting module 42 is configured to report PI information according to the PI information request received by the receiving module 41.

Optionally, the PI information request received by the receiving module 41 contains at least one or more of: a PI information reporting indicator, RAT/frequency point information specified to be reported, a cell type and specified geographical position information.

Optionally, the receiving module 41 is specifically configured to receive the PI information request contained in a private or public message from the network side.

Optionally, as shown in Fig. 5, the UE further includes a sending module 43.

The sending module 43 is configured to send PI indication information to the network side to indicate that the UE currently has PI information required to be reported.

The receiving module 41 is specifically configured to receive the PI information request sent according to the PI indication information by the network side, the PI information request containing at least one or more of: the specified RAT/frequency point information, the cell type and the specified geographical position information.

Optionally, the sending module 43 is specifically configured to contain the PI indication information in a measurement result reporting message or an independent message, and
the receiving module 41 is specifically configured to contain the PI information request in a measurement control command message or an independent message.

Optionally, the PI information reported by the reporting module 42 includes one or more of: RAT/frequency point information of a small cell, the cell type, an ECGI of the small cell, TAI information of the reported cell and broadcast PLMN list information of the reported cell.

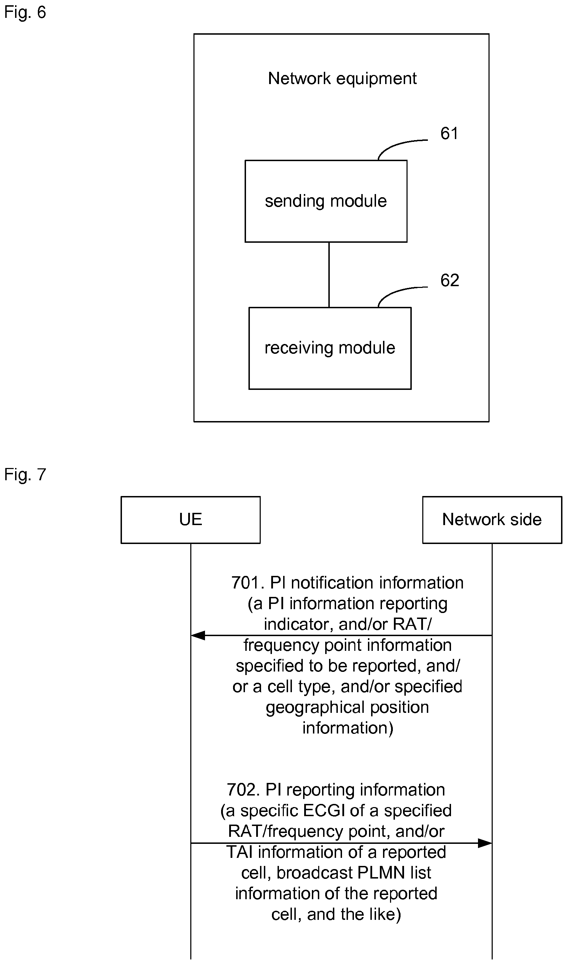

The embodiment of the present disclosure further provides network equipment. As shown in Fig. 6, the network equipment includes a sending module 61 and a receiving module 62.

The sending module 61 is configured to send a PI information request to UE.

The receiving module 62 is configured to receive PI information reported according to the PI information request by the UE.

Optionally, the PI information request sent by the sending module 61 contains at least one or more of: a PI information reporting indicator, RAT/frequency point information specified to be reported, a cell type and specified geographical position information.

Optionally, the sending module 61 is specifically configured to contain the PI information request in a private or public message.

Optionally, the receiving module 62 is further configured to receive PI indication information from the UE, the PI indication information indicating that the UE currently has PI information required to be reported; and
the sending module 61 is specifically configured to send the PI information request according to the PI indication information, the PI information request containing at least one or more of: the specified RAT/frequency point information, the cell type and the specified geographical position information.

Optionally, the receiving module 62 is specifically configured to receive the PI indication information contained in a measurement result reporting message or an independent message; and
the sending module 61 is specifically configured to contain the PI information request in a measurement control command message or an independent message.

Optionally, the network equipment is a Macrocell, a Femtocell, a Picocell, a Microcell or a Metrocell.

Optionally, the PI information received by the receiving module 62 includes one or more of: RAT/frequency point information of a small cell, the cell type, an ECGI of the small cell, TAI information of the reported cell and broadcast PLMN list information of the reported cell.

The embodiment of the present disclosure further provides a system for reporting a PI, which includes UE and network equipment.

The UE is the abovementioned UE; and
the network equipment is the abovementioned network equipment.

The embodiment of the present disclosure provides a computer storage medium having computer-executable instructions stored therein, the computer-executable instructions being configured to execute the abovementioned method.

The technical solutions of the present disclosure are further described below with reference to specific embodiments in detail.

### Embodiment 1

The UE which resides in a small cell may keep related information of the small cell in footprint, including, but not limited to, one or more of: an ECGI of the small cell, TAI information corresponding to the small cell, position information of the UE at the time of recording, RAT and frequency point information of the small cell, cell type information and signal quality of a macro cell at the time of recording, for example.

Here, the cell type information refers to information configured to distinguish different types of small cells, and there are many types of small cells at present, such as a Macrocell, a Femtocell, a Picocell, a Microcell and a Metrocell.

Fig. 7 is a flowchart showing PI reporting according to embodiment 1 of the present disclosure, and as shown in Fig. 7, the flow includes the following steps.

Step 701: a network side sends PI notification information to UE through a private or public message to indicate that the UE needs to perform small cell PI reporting, and then the UE may trigger autonomous PI reporting.

The PI notification information may include at least one of: a PI information reporting indicator, RAT/frequency point information specified to be reported, a cell type and specified geographical position information such as latitude and longitude information.

Step 702: the UE performs local processing according to the content in the PI notification information, and reports PI information. For example, the UE may compare the RAT/frequency point information, and/or cell type and/or specified geographical position information required to be reported with the historical information of the small cell which is locally stored in footprint, and retrieve a small cell which meets the reporting requirement for reporting. The PI information includes, but not limited to, at least one of: an ECGI of a specific small cell of a specified RAT/frequency point, TAI information of the reported cell, broadcast PLMN list information of the reported cell, and the like.

### Embodiment 2

The UE which resides in a small cell may keep related information of the small cell in footprint, including, but not limited to, one or more of: an ECGI of the small cell, TAI information corresponding to the small cell, position information of the UE at the time of recording, RAT and frequency point information of the small cell, cell type information and signal quality of a macro cell at the time of recording, for example.

Here, the cell type information refers to information configured to distinguish different types of small cells, and there are many types of small cells at present, such as a Macrocell, a Femtocell, a Picocell, a Microcell and a Metrocell.

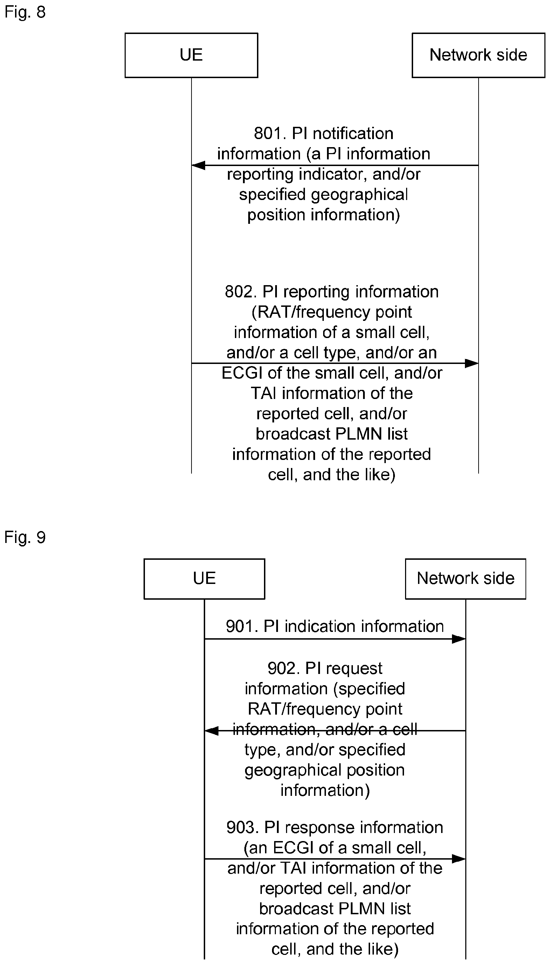

Fig. 8 is a flowchart showing PI reporting according to embodiment 2 of the present disclosure, and as shown in Fig. 8, the flow includes the following steps.

Step 801: a network side sends PI notification information to UE through a private or public message to indicate that the UE needs to perform small cell PI reporting, and then the UE may trigger autonomous PI reporting.

The PI notification information may include at least one of: a PI information reporting indicator and specified geographical position information such as latitude and longitude information.

Step 802: the UE performs local processing according to the content in the PI notification information, and reports PI information. For example, the UE may compare the specified geographical position information required to be reported with the historical information of the small cell which is locally stored in footprint, and retrieve a small cell which meets the reporting requirement for reporting. The PI information includes, but not limited to, at least one of: RAT/frequency point information of the small cell, a cell type, an ECGI of the small cell, TAI information of the reported cell, broadcast PLMN list information of the reported cell, and the like.

### Embodiment 3

The UE which resides in a small cell may keep related information of the small cell in footprint, including, but not limited to, one or more of: an ECGI of the small cell, TAI information corresponding to the small cell, position information of the UE at time of recording, RAT and frequency point information of the small cell, cell type information and signal quality of a macro cell at the time of recording, for example.

Here, the cell type information refers to information configured to distinguish different types of small cells, and there are many types of small cells at present, such as a Macrocell, a Femtocell, a Picocell, a Microcell and a Metrocell.

Fig. 9 is a flowchart showing PI reporting according to embodiment 3 of the present disclosure, and as shown in Fig. 9, the flow includes the following steps.

Step 901: the UE reports PI indication information to a network side.

The PI indication information indicates that the UE currently has PI information required to be reported, and may be a TRUE/FALSE indicator.

Herein, the PI indication information may be contained in a measurement result report, and may also be an independent message.

Step 902: the network side sends PI request information to the UE according to the PI indication information to instruct the UE to report specified PI information.

The PI request information includes PI information reporting instruction information, and includes at least one of: specified RAT/frequency point information, a cell type and specified geographical position information such as latitude and longitude information.

Herein, the PI request information may be contained in a measurement control command message, and may also be an independent message.

Step 903: the UE reports specified PI response information to the network side.

The UE performs local processing according to the content in the PI request message, and reports the PI response information. For example, the UE may compare at least one of the RAT/frequency point information, and/or the cell type and/or the specified geographical position information required to be reported with the historical information of the small cell which is locally stored in footprint, and retrieve a small cell which meets the reporting requirement for reporting. The PI response information includes, but not limited to, information of one or more specific small cells of a specified RAT/frequency point, including, but not limited to, at least one of: an ECGI of the small cell, TAI information of the reported cell, broadcast PLMN list information of the reported cell, and the like.

Herein, the PI response information may be contained in a measurement result reporting message, and may also be an independent message.

### Embodiment 4

The UE which resides in a small cell may keep related information of the small cell in footprint, including, but not limited to, one or more of: an ECGI of the small cell, TAI information corresponding to the small cell, position information of the UE at time of recording, RAT and frequency point information of the small cell, cell type information and signal quality of a macro cell at the time of recording, for example.

Here, the cell type information refers to information configured to distinguish different types of small cells, and there are many types of small cells at present, such as a Macrocell, a Femtocell, a Picocell, a Microcell and a Metrocell.

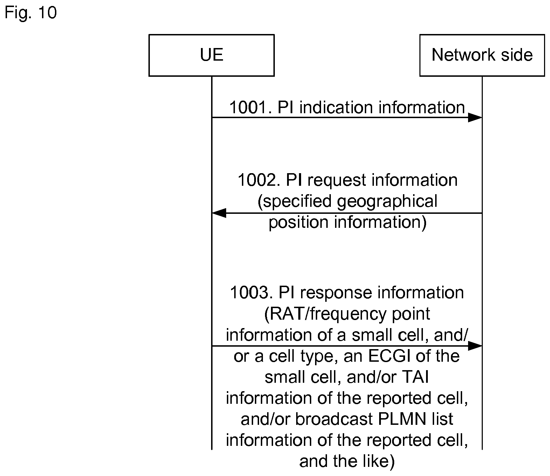

Fig. 10 is a flowchart showing PI reporting according to embodiment 4 of the present disclosure, and as shown in Fig. 10, the flow includes the following steps.

Step 1001: the UE reports PI indication information to a network side.

The PI indication information indicates that the UE currently has PI information required to be reported, and may be a TRUE/FALSE indicator.

Herein, the PI indication information may be contained in a measurement result report, and may also be an independent message.

Step 1002: the network side sends PI request information to the UE according to the PI indication information to instruct the UE to report specified PI information.

The PI request information includes PI information reporting instruction information, and includes specified geographical position information such as latitude and longitude information.

Herein, the PI request information may be contained in a measurement control command message, and may also be an independent message.

Step 1003: the UE reports specified PI response information to the network side.

The UE performs local processing according to the content in the PI request message, and reports the PI response information. For example, the UE may compare the specified geographical position information with the historical information of the small cell which is locally stored in footprint, and retrieve a small cell which meets the reporting requirement for reporting. The PI response information includes, but not limited to, at least one of: RAT/frequency point information of the small cell, a cell type, an ECGI of the small cell, TAI information of the reported cell, broadcast PLMN list information of the reported cell, and the like.

Herein, the PI response information may be contained in a measurement result reporting message, and may also be an independent message.

The solutions of the embodiments of the present disclosure may implement pertinent reporting of the PI information for multiple cell types under control of the network side in a complex small cell network environment, reduce unnecessary information reporting and resource waste on an air interface and enable the network side to effectively implement small cell discovery, handover judgment optimization processing and the like by virtue of the PI information reported by the UE, thereby facilitating improvement in network performance.

Each unit as described above may be implemented by a Central Processing Unit (CPU), Digital Signal Processor (DSP) or Field-Programmable Gate Array (FPGA) in electronic equipment.

Those skilled in the art should know that the embodiments of the present disclosure may be provided as a method, a system or a computer program product. Therefore, the present disclosure may adopt hardware, software or combination thereof. Moreover, the present disclosure may adopt computer program product implemented on one or more computer-available storage media (including, but not limited to, a disk memory and an optical memory) including computer-available program codes.

The present disclosure is described with reference to flowcharts and/or block diagrams of the method, equipment (system) and computer program product according to the embodiments of the present disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a general computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of instructing the computer or the other programmable data processing equipment to work in a specific manner, so that a product including an instruction device may be generated by the instructions stored in the computer-readable memory, the instruction device realizing the functions specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiments of the present disclosure and not intended to limit the scope of protection of the present disclosure.

### INDUSTRIAL APPLICABILITY

According to the method and system for reporting the PI, the UE, the network equipment and the computer storage medium of the embodiments of the present disclosure, the UE receives the PI information request from the network side; and the UE reports the corresponding PI information according to the PI information request. Based on the abovementioned solutions, the embodiments of the present disclosure may implement pertinent reporting of the PI information for multiple cell types under control of the network side in a complex small cell network environment, reduce unnecessary information reporting and resource waste on an air interface and enable the network side to effectively implement small cell discovery, handover judgment optimization processing and the like by virtue of the PI information reported by the UE, thereby achieving higher accuracy and effectiveness of PI information reporting and facilitating improvement in network performance.

## Claims

1. A method for reporting a Proximity Indication, PI, in an Long Term Evolution, LTE, system, the method comprises:
sending (200), by a User Equipment, UE, PI indication information to a network side to indicate that the UE currently has PI information required to be reported;
receiving (201), by the UE, a PI information request from the network side;
wherein the receiving, by the UE, the PI information request from the network side comprises: receiving, by the UE, the PI information request sent by the network side according to the PI indication information; the PI information request contains at least one or more of: specified RAT/frequency point information, a cell type and specified geographical position information;
and
reporting (202), by the UE, PI information according to the PI information request;
wherein the PI information reported by the UE comprises one or more of: RAT of a small cell, a cell type, Tracking Area Identity, TAI, information of a reported cell and broadcast Public Land Mobile Network, PLMN, list information of a reported cell.

2. The method according to claim 1, wherein the step of receiving, by the UE, the PI information request from the network side is implemented by: receiving, by the UE, the PI information request contained in a private or public message from the network side.

3. The method according to claim 2, wherein
the PI indication information is contained in a measurement result reporting message or an independent message, and
the PI information request is contained in a measurement control command message or an independent message.

4. The method according to any one of claims 1 to 3, wherein the network side comprises at least any one of: a Macrocell, a Femtocell, a Picocell, a Microcell and a Metrocell.

5. A User Equipment, UE, configured to operate in an Long Term Evolution, LTE, system, comprising:
a sending module (43), a receiving module (41) and a reporting module (42);
the sending module (43) is configured to send PI indication information to a network side to indicate that a UE currently has PI information required to be reported;
the receiving module (41) is configured to receive a Proximity Indication, PI, information request from the network side;
wherein the receiving module is further configured to receive the PI information request sent by the network side according to the PI indication information; the PI information request contains at least one or more of: specified RAT/frequency point information, a cell type and specified geographical position information;
and
the reporting module (42) is configured to report PI information according to the PI information request received by the receiving module;
wherein the PI information reported by the UE comprises one or more of: RAT of a small cell, a cell type, Tracking Area Identity, TAI, information of a reported cell and broadcast Public Land Mobile Network, PLMN, list information of a reported cell.

6. The UE according to claim 5, wherein
the receiving module is further configured to receive the PI information request contained in a private or public message from the network side.

7. A Network equipment, configured to operate in an Long Term Evolution, LTE, system, comprising:
a sending module (61) and a receiving module (62),
the sending module (61) is configured to send a Proximity Indication, PI, information request to User Equipment, UE; and
the receiving module (62) is configured to receive PI information reported according to the PI information request by the UE; wherein the PI information reported by the UE comprises one or more of: RAT of a small cell, a cell type, Tracking Area Identity, TAI, information of a reported cell and broadcast Public Land Mobile Network, PLMN, list information of a reported cell;
wherein the receiving module (62) is further configured to receive PI indication information from the UE, the PI indication information indicating that the UE currently has PI information required to be reported; and
the sending module (61) is further configured to send the PI information request according to the PI indication information, the PI information request contains at least one or more of: specified RAT/frequency point information, a cell type and specified geographical position information.

8. The network equipment according to claim 7, wherein
the sending module (61) is further configured to contain the PI information request in a private or public message.

9. A computer storage medium having computer-executable instructions stored therein, the computer- executable instructions being configured - when executed in a computer - to perform the method according to any one of claims 1 to 4.

## Patentansprüche

1. Verfahren zur Meldung einer Näherungsanzeige, PI, in einem LTE (Long Term Evolution)-System, wobei das Verfahren umfasst:
Senden (200) von PI-Anzeigeinformationen durch eine Benutzereinrichtung, UE, an eine Netzwerkseite, um anzuzeigen, dass die UE gegenwärtig PI-Informationen aufweist, die gemeldet werden müssen;
Empfangen (201) einer PI-Informationsanforderung durch die UE von der Netzwerkseite;
wobei das Empfangen der PI-Informationsanforderung durch die UE von der Netzwerkseite umfasst: Empfangen der PI-Informationsanforderung, die durch die Netzwerkseite gemäß den PI-Anzeigeinformationen gesendet werden, durch die UE; wobei die PI-Anzeigeinformationen mindestens eines oder mehreres enthalten von: spezifizierten RAT-/Frequenzpunktinformationen, einem Zelltyp und spezifizierten geografischen Positionsinformationen;
und
Melden (202) von PI-Informationen durch die UE gemäß der PI-Informationsanforderung;
wobei die PI-Informationen, die durch die UE gemeldet werden, eines oder mehreres umfassen von: einer RAT einer kleinen Zelle, einem Zelltyp, einer Verfolgungsbereichskennung, TAI, Informationen einer gemeldeten Zelle und PLMN (öffentliches Landfunknetzwerk)-Broadcast-Listeninformationen einer gemeldeten Zelle.

2. Verfahren nach Anspruch 1, wobei der Schritt des Empfangens der PI-Informationsanforderung durch die UE von der Netzwerkseite implementiert wird durch: Empfangen der PI-Informationsanforderung, die in einer privaten oder öffentlichen Nachricht von der Netzwerkseite enthalten ist, durch die UE.

3. Verfahren nach Anspruch 2, wobei
die PI-Anzeigeinformationen in einer Messergebnismeldenachricht oder einer unabhängigen Nachricht enthalten sind, und
die PI-Informationsanforderung in einer Messungssteuerbefehlsnachricht oder einer unabhängigen Nachricht enthalten ist.

4. Verfahren nach einem der Ansprüche 1 bis 3, wobei die Netzwerkseite mindestens eine umfasst von: einer Makrozelle, einer Femtozelle, einer Pikozelle, einer Mikrozelle und einer Metrozelle.

5. Benutzereinrichtung, UE, die zu Betrieb in einem LTE (Long Term Evolution)-System konfiguriert ist und umfasst:
ein Sendemodul (43), ein Empfangsmodul (41) und ein Meldemodul (42);
wobei das Sendemodul (43) so konfiguriert ist, das es PI-Anzeigeinformationen an eine Netzwerkseite sendet, um anzuzeigen, dass die UE gegenwärtig PI-Informationen aufweist, die gemeldet werden müssen;
das Empfangsmodul (41) so konfiguriert ist, dass es eine Näherungsanzeige, PI-Informationsanforderung von der Netzwerkseite empfängt;
wobei das Empfangsmodul ferner so konfiguriert ist, dass es die PI-Informationsanforderung empfängt, die durch die Netzwerkseite gemäß den PI-Anzeigeinformationen gesendet wird; wobei die PI-Anzeigeinformationen mindestens eines oder mehreres enthalten von: spezifizierten RAT-/Frequenzpunktinformationen, einem Zelltyp und spezifizierten geografischen Positionsinformationen;
und
das Meldemodul (42) so konfiguriert ist, dass es PI-Informationen gemäß der durch das Empfangsmodul empfangenen PI-Informationsanforderung meldet;
wobei die PI-Informationen, die durch die UE gemeldet werden, eines oder mehreres umfassen von: einer RAT einer kleinen Zelle, einem Zelltyp, einer Verfolgungsbereichskennung, TAI, Informationen einer gemeldeten Zelle und PLMN (öffentliches Landfunknetzwerk)-Broadcast-Listeninformationen einer gemeldeten Zelle.

6. UE nach Anspruch 5, wobei
das Empfangsmodul ferner so konfiguriert ist, dass es die PI-Informationen empfängt, die in einer privaten oder öffentlichen Nachricht von der Netzwerkseite enthalten ist.

7. Netzwerkeinrichtung, die zu Betrieb in einem LTE (Long Term Evolution)-System konfiguriert ist und umfasst:
ein Sendemodul (61) und ein Empfangsmodul (62),
wobei das Sendemodul (61) so konfiguriert ist, dass es eine Näherungsanzeige, PI,-Informationsanforderung an eine Benutzereinrichtung, UE, sendet;
das Empfangsmodul (62) so konfiguriert ist, dass es PI-Informationen empfängt, die durch die UE gemäß der PI-Informationsanforderung gemeldet werden; wobei die durch die UE gemeldeten PI-Informationen eines oder mehreres umfassen von: einer RAT einer kleinen Zelle, einem Zelltyp, einer Verfolgungsbereichskennung, TAI, Informationen einer gemeldeten Zelle und PLMN (öffentliches Landfunknetzwerk)-Broadcast-Listeninformationen einer gemeldeten Zelle;
wobei das Empfangsmodul (62) ferner so konfiguriert ist, das es PI-Anzeigeinformationen von der UE empfängt, wobei die PI-Anzeigeinformationen anzeigen, dass die UE gegenwärtig PI-Informationen aufweist, die gemeldet werden müssen; und
das Sendemodul (61) ferner so konfiguriert ist, dass es die PI-Informationsanforderung gemäß den PI-Anzeigeinformationen sendet; wobei die PI-Anzeigeinformationen mindestens eines oder mehreres enthalten von: spezifizierten RAT-/Frequenzpunktinformationen, einem Zelltyp und spezifizierten geografischen Positionsinformationen.

8. Netzwerkeinrichtung nach Anspruch 7, wobei
das Sendemodul (61) ferner so konfiguriert ist, dass es die PI-Informationsanforderung in eine private oder öffentliche Nachricht aufnimmt.

9. Computerspeichermedium mit darauf gespeicherten computerausführbaren Anweisungen, wobei die computerausführbaren Anweisungen so konfiguriert sind, dass sie bei Ausführung auf einem Computer das Verfahren nach einem der Ansprüche 1 bis 4 durchführen.

## Revendications

1. Procédé de signalement d'une indication de proximité, PI, dans un système de technologie d'évolution à long terme, LTE, **caractérisé en ce que** le procédé comprend les étapes ci-dessous consistant à :
envoyer (200), par le biais d'un équipement d'utilisateur, UE, des informations d'indication PI à un côté de réseau, en vue d'indiquer que l'équipement UE présente actuellement des informations d'indication PI qui doivent être signalées ;
recevoir (201), par le biais de l'équipement UE, une demande d'informations d'indication PI en provenance du côté de réseau ;
dans lequel, l'étape de réception, par le biais de l'équipement UE, de la demande d'informations d'indication PI en provenance du côté de réseau, comprend l'étape consistant à : recevoir, par le biais de l'équipement UE, la demande d'informations d'indication PI envoyée par le côté de réseau selon les informations d'indication PI ; dans lequel la demande d'informations d'indication PI contient au moins un ou plusieurs des éléments suivants : des informations de point de fréquence/technologie RAT spécifiées, un type de cellule, et des informations de position géographique spécifiées ; et
signaler (202), par le biais de l'équipement UE, des informations d'indication PI selon la demande d'informations d'indication PI ;
dans lequel les informations d'indication PI signalées par l'équipement UE comportent un ou plusieurs des éléments suivants : la technologie RAT d'une petite cellule, un type de cellule, des informations d'identité de zone de suivi, TAI, d'une cellule signalée, et des informations de liste de réseaux publics terrestres mobiles, PLMN, de diffusion, d'une cellule signalée.

2. Procédé selon la revendication 1, dans lequel l'étape de réception, par le biais de l'équipement UE, de la demande d'informations d'indication PI en provenance du côté de réseau, est mise en oeuvre: en recevant, par le biais de l'équipement UE, la demande d'informations d'indication PI contenue dans un message privé ou public en provenance du côté de réseau.

3. Procédé selon la revendication 2, dans lequel :
les informations d'indication PI sont contenues dans un message de signalement de résultats de mesure ou un message indépendant ; et
la demande d'informations d'indication PI est contenue dans un message d'instruction de commande de mesure ou un message indépendant.

4. Procédé selon l'une quelconque des revendications 1 à 3, dans lequel le côté de réseau comprend au moins l'une quelconque parmi : une macrocellule, une femtocellule, une picocellule, une microcellule et une métrocellule.

5. Équipement d'utilisateur, UE, configuré de manière à fonctionner dans un système de technologie d'évolution à long terme, LTE, comprenant :
un module d'envoi (43), un module de réception (41) et un module de signalement (42) ;
le module d'envoi (43) est configuré de manière à envoyer des informations d'indication PI à un côté de réseau en vue d'indiquer qu'un équipement UE présente actuellement des informations d'indication PI qui doivent être signalées ;
le module de réception (41) est configuré de manière à recevoir une demande d'informations d'indication de proximité PI en provenance du côté de réseau ;
dans lequel le module de réception est en outre configuré de manière à recevoir la demande d'informations d'indication PI envoyée par le côté de réseau selon les informations d'indication PI ; dans lequel la demande d'informations d'indication PI contient au moins un ou plusieurs des éléments suivants : des informations de point de fréquence/technologie RAT spécifiées, un type de cellule, et des informations de position géographique spécifiées ; et
le module de signalement (42) est configuré de manière à signaler des informations d'indication PI selon la demande d'informations d'indication PI reçue par le module de réception ;
dans lequel les informations d'indication PI signalées par l'équipement UE comportent un ou plusieurs des éléments suivants : la technologie RAT d'une petite cellule, un type de cellule, des informations d'identité de zone de suivi, TAI, d'une cellule signalée, et des informations de liste de réseaux publics terrestres mobiles, PLMN, de diffusion, d'une cellule signalée.

6. Équipement UE selon la revendication 5, dans lequel :
le module de réception est en outre configuré de manière à recevoir la demande d'informations d'indication PI contenue dans un message privé ou public en provenance du côté de réseau.

7. Équipement de réseau configuré de manière à fonctionner dans un système de technologie d'évolution à long terme, LTE, comprenant :
un module d'envoi (61) et un module de réception (62) ;
dans lequel le module d'envoi (61) est configuré de manière à envoyer une demande d'informations d'indication de proximité, PI, à un équipement d'utilisateur, UE ; et
dans lequel le module de réception (62) est configuré de manière à recevoir des informations d'indication PI signalées selon la demande d'informations d'indication PI par l'équipement UE ; dans lequel les informations d'indication PI signalées par l'équipement UE comportent un ou plusieurs des éléments suivants : une technologie RAT d'une petite cellule, un type de cellule, des informations d'identité de zone de suivi, TAI, d'une cellule signalée, et des informations de liste de réseaux publics terrestres mobiles, PLMN, de diffusion, d'une cellule signalée ;
dans lequel le module de réception (62) est en outre configuré de manière à recevoir des informations d'indication PI en provenance de l'équipement UE, les informations d'indication PI indiquant que l'équipement UE présente actuellement des informations d'indication PI qui doivent être signalées ; et
le module d'envoi (61) est en outre configuré de manière à envoyer la demande d'informations d'indication PI selon les informations d'indication PI, dans lequel la demande d'informations d'indication PI contient au moins un ou plusieurs des éléments suivants : des informations de point de fréquence/technologie RAT spécifiées, un type de cellule et des informations de position géographique spécifiées.

8. Équipement de réseau selon la revendication 7, dans lequel :
le module d'envoi (61) est en outre configuré de manière à contenir la demande d'informations d'indication PI dans un message privé ou public.

9. Support de stockage informatique présentant des instructions exécutables par ordinateur stockées dans celui-ci, les instructions exécutables par ordinateur étant configurées, lorsqu'elles sont exécutées dans un ordinateur, de manière à mettre en oeuvre le procédé selon l'une quelconque des revendications 1 à 4.
